# EUROPÄISCHE PATENTSCHRIFT

(11) **EP 1 039 274 B1**
(45) Veröffentlichungstag und Bekanntmachung des Hinweises auf die Patenterteilung: **16.01.2008**
(21) Anmeldenummer: 99106020.3
(22) Anmeldetag: 25.03.1999
(51) Int. Cl.: G01F 23/292, G02B 23/16

(54) **Laserstrahlmessgerät**
Measuring device employing a laser beam
Appareil de mesure à faisceau laser

(43) Veröffentlichungstag der Anmeldung: 27.09.2000
(73) Patentinhaber: Endress + Hauser GmbH + Co. KG, 79689 Maulburg (DE)
(72) Erfinder: Schrank, Willi, 79650 Schopfheim (DE)
(74) Vertreter: Andres, Angelika Maria

(56) Entgegenhaltungen:
- WO-A-89/02069
- WO-A-95/10030
- FR-A- 1 432 792
- US-A- 4 749 273
- US-A- 5 194 747

## Beschreibung

Die Erfindung bezieht sich auf ein Laserstrahlmeßgerät.

Mit Laserstrahlen arbeitende Meßgeräte sind üblich. Sie finden zu unterschiedlichsten Meßzwecken Anwendung, wie z.B. zur Füllstandsmessung in bzw. an Behältern, zur Abstandsmessung von Objekten, zur Abtastung von Oberflächenstrukturen u.a. und beruhen auf dem Prinzip der Laufzeitmessung. Es werden Laserstrahlimpulse von einem Laserstrahlimpuls-Sender auf ein Objekt gerichtet und von diesem reflektierte Lichtstrahlen von einer Auswerteelektronik empfangen. Die Laufzeit des Laserstrahlimpulses vom Laserstrahlimpuls-Sender bis zum Objekt plus die Laufzeit der vom Objekt zu einem Lichtimpuls-Empfänger reflektierten Lichtstrahlen ist im allgemeinen die auszuwertende Meßgröße.

Wenn sich Laserstrahlimpuls-Sender und Lichtimpuls-Empfänger in gleichem Abstand zum Objekt befinden und t die gemessene Gesamtlaufzeit ist, so ist unter Berücksichtigung der Lichtgeschwindigkeit c der Abstand d zu diesem Objekt: d = tc/2.

Indem die Laserstrahlen z.B. auf die Oberfläche des Füllgutes eines Behälters gerichtet und von dieser reflektiert werden, lassen sich Änderungen des Füllstandes feststellen und überwachen.

Der Laserstrahlimpuls-Sender sendet die Laserstrahlimpulse durch eine Schutzscheibe oder eine zum Laserstrahlmeßgerät gehörende Linse von dessen Gehäuse hindurch, und auch der Lichtimpuls-Empfänger, der vorzugsweise mit dem Laserstrahlimpuls-Sender im Gehäuse integriert ist, empfängt die reflektierten Lichtstrahlimpulse durch diese Schutzscheibe bzw. diese Linse hindurch.

Ein dabei auftretendes Problem ist die erforderliche fortlaufende Wartung des Gerätes, besonders wenn es z.B. in staubiger oder sonst verunreinigungsträchtiger Umgebung zum Einsatz kommt. Die Schutzscheibe oder die Linse muß dann ständig, d.h. eigentlich vor jeder Messung, gesäubert werden, damit das Gerät einwandfrei arbeiten und zuverlässige Meßdaten liefern kann.

In der WO-A 95/10030 ist ein Laserfüllstandsmeßgerät beschrieben, bei dem seitlich im Gehäuse eine Öffnung angeordnet ist, durch die mit einem Reinigungstuch die Schutzscheibe oder die Linse immer wieder manuell zu reinigen ist.

Es ist eine Aufgabe der Erfindung, ein möglichst wartungsfreies Laserstrahlmeßgerät zu schaffen, bei dem Verschmutzungen an der Linse oder der Schutzscheibe im Aus- bzw. Eintrittsfenster des Gerätes von vornherein soweit wie möglich vermieden sind und eine Reinigung, insb. die Reinigung vor jeder Messung, überflüssig ist.

Zur Lösung dieser Aufgabe besteht die Erfindung in einem Laserstrahlmeßgerät,
- bei dem vor einem Durchtrittsfenster für Laserstrahlen,
   -- in das eine Schutzscheibe oder eine Linse eingesetzt ist,
- eine Druckluftkammer angeordnet ist,
   -- die einen Druckluftanschluß aufweist,
      --- der über eine Druckluftleitung mit einer Druckluftquelle verbunden ist und
      --- dem im Betrieb Druckluft zugeführt ist,
   -- auf deren vom Durchtrittsfenster abgewandten Seite eine Luftschleuse angeordnet ist,
      --- in deren geöffnetem Zustand ein Lichtkanal für den Durchtritt der Laserstrahlen und für von einem Objekt reflektierte Lichtstrahlen freigegeben ist,
      --- in deren geschlossenem Zustand der Lichtkanal verschlossen ist und
      --- die nur während einer Messung geöffnet ist.

Der Grundgedanke der Erfindung besteht darin, die Reinigung der Schutzscheibe oder der Linse des Meßgerätes mit einem Druckluftstrahl vorzunehmen. Ein die Schutzscheibe oder die Linse permanent bestreichender Druckluftstrahl wäre aber aufwendig und kostenintensiv, u.a. weil ein die Druckluft bereitstellender Kompressor dauernd in Betrieb sein müßte. Daher ist vor dem Durchtrittsfenster für die Laser- bzw. Lichtstrahlen eine Druckluftkammer angeordnet, die über einen Druckluftanschluß, ein Stellglied und eine Druckluftleitung mit der Druckluft gespeist wird.

Nach einer bevorzugten ersten Ausgestaltung der Erfindung ist in der Druckluftleitung ein Stellglied angeordnet ist, das bei geöffneter Luftschleuse für die Druckluftzufuhr gesperrt ist.

Nach einer bevorzugten zweiten Ausgestaltung der Erfindung ist das Stellglied bei geöffneter Luftschleuse für die Druckluftzufuhr geöffnet ist.

Nach einer bevorzugten ersten Weiterbildung der Erfindung und deren erwähnten Ausgestaltungen stellt das Stellglied den Druck in der Druckluftkammer auf maximal 200 kPa (= 2 bar) ein bzw. begrenzt ihn darauf.

Nach einer bevorzugten dritten Ausgestaltung der Erfindung erfolgt eine Betätigung der Luftschleuse mittels eines Motors und die Betätigung ist mit dem Beginn einer Messung sychronisiert.

Nach einer bevorzugten Weiterbildung der dritten Ausgestaltung der Erfindung ist der Motor elektrisch oder pneumatisch angetrieben.

Nach einer bevorzugten vierten Ausgestaltung der Erfindung und deren Weiterbildungen ist in der Druckluftleitung zwischen Druckluftkammer und Druckluftquelle ein Ölfilter angeordnet.

Ein Vorteil der Erfindung ist, daß der bei geschlossener Luftschleuse in der Luftdruckkammer aufgebaute Überdruck verhindert, daß Staub- oder Schmutzteilchen in die Luftdruckkammer eindringen und sich auf der Schutzscheibe oder der Linse im Druchtrittsfenster ablagern. Beim kurzen Öffnen der Luftschleuse für eine Messung strömt dann Luft aus der Luftdruckkammer aus und verhindert so während des Meßvorgangs ebenfalls, daß Staub- oder Schmutzteilchen in die Druckluftkammer und zur Schutzscheibe oder zur Linse gelangen können. Dieser Vorteil ergibt sich auch bei der erwähnten zweiten Ausgestaltung der Erfindung.

Das Laserstrahlmeßgerät ist somit weitestgehend wartungsfrei, denn eine laufend, in kurzen Zeitabständen zu wiederholende Säuberung des Durchtrittsfesters wie beim eingangs erwähnten Stand der Technik ist nicht erfoderlich.

Da die Luftschleuse nur für die Dauer einer Messung geöffnet wird und der Druck in der Druckluftkammer bei geschlossener Luftschleuse auf einen nicht zu hohen Wert begrenzt werden kann, ist der Druckluftverbrauch insgesamt sehr gering. Die Druckluft kann durch eine kleine Pumpe vor Ort während der Meßpausen bereitgestellt werden. Aufwendige Druckluftleitungen sind nicht erforderlich.

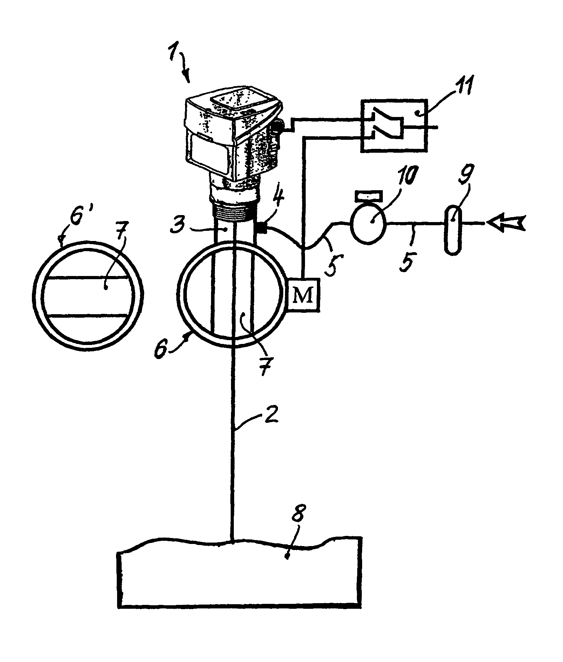

Die Erfindung wird nun anhand der einzigen Figur der Zeichnung näher erläutert, in der ein Ausführungsbeispiel eines Laserstrahlmeßgeräts schematisch dargestellt ist.

Ein Laserstrahlmeßgerät 1 weist ein in der Zeichnung nicht sichtbares Durchtrittsfenster für Laserstrahlen auf, in das eine Linse oder eine Schutzscheibe eingesetzt ist. Vor dem Durchtrittsfenster ist eine Druckluftkammer 3 angeordnet, die über einen Druckluftanschluß 4 und eine Druckluftleitung 5 im Betrieb mit Druckluft gespeist ist, was durch den Pfeil veranschaulicht ist.

Die Druckluftkammer 3 wird auf ihrer vom Meßgerät 1 abgewandten Seite durch eine Luftschleuse 6, 6' geöffnet oder geschlossen. Der geöffnete Zustand ist in der Figur mit 6 und der geschlossene mit 6' bezeichnet.

Dies geschieht derart, daß bei geöffneter Luftschleuse 6 der Lichtkanal 7 für den Durchtritt der Laser- bzw. Lichtstrahlen 2 freigegeben ist, daß die Laserstrahlen 2 also auf ein Meßobjekt 8 treffen können und die vom Meßobjekt 8 reflektierten Lichtstrahlen in das Meßgerät 1 eintreten können, daß dagegen bei geschlossener Luftschleuse 6' der Lichtkanal 7 verschlossen ist. Das Öffnen und Schließen der Luftschleuse 6' wird mittels eines Motors M vorgenommen, der elektrisch oder pneumatisch angetrieben sein kann.

In die Druckluftleitung 5 ist zwischen der Druckluftquelle und dem Druckluftanschluß 4 an der Druckluftkammer 3 bevorzugt ein Ölfilter 9 eingebaut, das gewährleistet, daß die Druckluftkammer 3 nur mit ölfreier Druckluft gespeist wird.

In der Druckluftleitung 5 ist bevorzugt ein Stellglied 10 angeordnet, das bei geöffneter Luftschleuse für die Druckluftzufuhr gesperrt ist. Alternativ hierzu kann das Stellglied bei geöffneter Luftschleuse für die Druckluftzufuhr geöffnet sein.

Mittels des Stellglieds 10 kann auch der Druck in der Druckluftkammer 3 auf einen vom Benutzer wählbaren Maximalwert eingestellt und begrenzt werden; dieser beträgt vorzugsweise 2 kPa (= 2 bar).

Das Laserstrahlmeßgerät 1 und der Motor M der Luftschleuse 6, 6' werden durch eine elektronische Steuerungsvorrichtung 11 dersrt synchron gesteuert, daß die Betätigung des Motors mit dem Beginn einer Messung sychronisiert ist.

Eine Messung verläuft wie folgt. Zunächst wird bei geschlossener Luftschleuse 6' in der Druckluftkammer 3 ein Luftdruck von vorzugsweise maximal 2 kaP (= 2 bar) aufgebaut. Danach wird die Luftschleuse 6' für die Messung, vorzugsweise elektronisch gesteuert und mit dem Aussenden eines Laserstrahlimpulses 2 synchronisiert, kurz geöffnet und somit der Lichtkanal 7 solange freigegeben, bis die vom Meßobjekt 8 reflektierten Lichtstrahlen vom Lichtimpuls-Empfänger im Meßgerät 1 empfangen sind. Danach wird die Luftschleuse 6, bevorzugt ebenfalls elektronisch gesteuert, wieder geschlossen.

Der in der Druckluftkammer 3 herrschende Überdruck und die beim Öffnen der Luftschleuse 6' infolgedessen durch den Lichtkanal 7 ausströmende Luft verhindert, daß Staub- oder Schmutzteilchen durch den Lichtkanal 7 in die Druckluftkammer 3 eindringen und sich auf der Schutzscheibe oder der Linse in der Durchtrittsöffnung des Meßgerätes 1 ablagern können.

Verstärkt wird dieser Effekt noch, wenn auch während des Meßvorgangs, also bei geöffneter Luftschleuse 6, Luft durch den Druckluftanschluß 4 in die Druckluftkammer 3 eingeblasen wird. Wenn, sobald der Meßvorgang beendet ist, die Luftschleuse 6 wieder geschlossen wird, kann sich in der Druckluftkammer 3 in kurzer Zeit wieder der Überdruck von vorzugsweise 2 kPa aufbauen und das Gerät ist danach bereit für die nächste Messung.

Da die Luftschleuse 6, 6' nur für die Messung geöffnet wird und sonst geschlossen bleibt, ist der Druckluftverbrauch sehr gering, so daß die Druckluft durch eine kleine Pumpe an der Meßstelle während der Meßpausen vor Ort bereitgestellt werden kann; aufwendige Druckluftleitungen sind nicht erforderlich. Die Pumpe braucht auch nicht ununterbrochen mit voller Leistung zu laufen, was der Fall wäre, wenn die erforderliche Säuberung durch einen die Schutzscheibe oder die Linse des Meßgerätes permanent bestreichenden Druckluftstrahl vorgenommen würde.

## Patentansprüche

1. Laserstrahlmeßgerät (1),
- bei dem vor einem Durchtrittsfenster für Laserstrahlen (2),
-- in das eine Schutzscheibe oder eine Linse eingesetzt ist, **dadurch gekennzeichnet daß**
- eine Druckluftkammer (3) angeordnet ist,
-- die einen Druckluftanschluß (4) aufweist,
--- der über eine Druckluftleitung (5) mit einer Druckluftquelle verbunden ist und
--- dem im Betrieb Druckluft zugeführt ist,
- - auf deren vom Durchtrittsfenster abgewandten Seite eine Luftschleuse (7) angeordnet ist,
--- in deren geöffnetem Zustand (6) ein Lichtkanal (7) für den Durchtritt der Laserstrahlen (2) und für von einem Objekt (8) reflektierte Lichtstrahlen freigegeben ist,
--- in deren geschlossenem Zustand (6') der Lichtkanal (7) verschlossen ist und
--- die nur während der Messung geöffnet ist.

2. Laserstrahlmeßgerät nach Anspruch 1, bei dem in der Druckluftleitung ein Stellglied (10) angeordnet ist, das bei geöffneter Luftschleuse (6) für die Druckluftzufuhr gesperrt ist.

3. Laserstrahlmeßgerät nach Anspruch 1, bei dem das Stellglied (10) bei geöffneter Luftschleuse (6) für die Druckluftzufuhr geöffnet ist.

4. Laserstrahlmeßgerät nach einem der Ansprüche 1 bis 3, bei dem das Stellglied (10) den Druck in der Druckluftkammer (3) auf maximal 200 kPa (= 2 bar) einstellt bzw. begrenzt.

5. Laserstrahlmeßgerät nach einem der Ansprüche 1 bis 4, bei dem eine Betätigung der Luftschleuse (6, 6') mittels eines Motors (M) erfolgt und die Betätigung mit dem Beginn einer Messung sychronisiert ist.

6. Laserstrahlmeßgerät nach Anspruch 5, bei dem der Motor (M) elektrisch oder pneumatisch angetrieben ist.

7. Laserstrahlmeßgerät nach einem der Ansprüche 1 bis 6, bei dem in der Druckluftleitung (5) zwischen Druckluftkammer (3) und Druckluftquelle ein Ölfilter (9) angeordnet ist.

## Claims

1. Laser-beam measuring device (1),
- in which, in front of a passage window for laser beams (2),
-- into which window a protective pane or a lens is inserted, **characterised in that**
- a compressed-air chamber (3) is arranged,
-- which has a compressed-air connection (4),
--- which is connected via a compressed-air line (5) to a compressed-air source, and
--- to which compressed air is supplied in operation,
--on whose side remote from the passage window there is arranged an air lock (7),
--- in whose open condition (6) a light channel (7) is open for the passage of the laser beams (2) and for light beams reflected from an object (8),
--- in whose closed condition (6') the light channel (7) is closed, and
--- which is only open during the measurement.

2. Laser-beam measuring device according to Claim 1, in which the compressed-air line has a control element (10) arranged therein which blocks the supply of compressed air when the air lock (6) is open.

3. Laser-beam measuring device according to Claim 1, in which the control element (10) permits the supply of compressed air when the air lock (6) is open.

4. Laser-beam measuring device according to one of Claims 1 to 3, in which the control element (10) sets or limits the pressure in the compressed-air chamber (3) to a maximum of 200 kPa (= 2 bar).

5. Laser-beam measuring device according to one of Claims 1 to 4, in which the air lock (6, 6') is actuated by means of a motor (M), and the actuation is synchronised with the beginning of a measurement.

6. Laser-beam measuring device according to Claim 5, in which the motor (M) is electrically or pneumatically driven.

7. Laser-beam measuring device according to one of Claims 1 to 6, in which an oil filter (9) is arranged in the compressed-air line (5) between the ' compressed-air chamber (3) and the compressed-air source.

## Revendications

1. Appareil de mesure à faisceau laser (1),
- pour lequel, devant une fenêtre de passage des rayons laser (2),
-- dans laquelle est inséré un verre de protection ou une lentille,
**caractérisé en ce**
- **qu'**est disposée une chambre d'air comprimé (3),
-- qui comporte un raccord d'air comprimé (4),
--- qui est relié par l'intermédiaire d'une conduite d'air comprimé (5) à une source d'air comprimé, et
- auquel est acheminé de l'air comprimé pendant le fonctionnement,
-- sur le côté opposé à la fenêtre de passage duquel est disposé un sas d'air (6),
--- dans l'état ouvert (6) duquel un canal lumineux (7) est ouvert pour le passage des rayons laser (2) et pour les rayons lumineux réfléchis par un objet (8),
--- dans l'état fermé (6') duquel le canal lumineux (7) est obturé et
--- qui n'est ouvert que pendant une mesure.

2. Appareil de mesure à faisceau laser selon la revendication 1, pour lequel est disposé dans la conduite d'air comprimé un organe de réglage (10), qui bloque l'arrivée d'air comprimé lorsque le sas d'air (6) est ouvert.

3. Appareil de mesure à faisceau laser selon la revendication 1, pour lequel l'organe de réglage (10) est ouvert lorsque le sas d'air (6) est ouvert, permettant ainsi l'arrivée d'air comprimé.

4. Appareil de mesure à faisceau laser selon l'une des revendications 1 à 3, pour lequel l'organe de réglage (10) règle ou limite la pression dans la chambre d'air comprimé (3) à un maximum de 200 kPa (= 2 bars)

5. Appareil de mesure à faisceau laser selon l'une des revendications 1 à 4, pour lequel une commande du sas d'air (6, 6') est réalisée au moyen d'un moteur (M) et la commande est synchronisée avec le début d'une mesure

6. Appareil de mesure à faisceau laser selon la revendication 5, pour lequel le moteur (M) est à commande électrique ou pneumatique.

7. Appareil de mesure à faisceau laser selon l'une des revendications 1 à 6, pour lequel un filtre à huile (9) est disposé dans la conduite d'air comprimé (5), entre la chambre d'air comprimé (3) et la source d'air comprimé.
